# EUROPEAN PATENT SPECIFICATION

(11) **EP 4 266 781 B1**
(45) Date of publication and mention of the grant of the patent: **09.12.2026**
(21) Application number: 20967451.4
(22) Date of filing: 29.12.2020
(51) Int. Cl.: H04L 5/00, H04W 8/24, H04L 27/26

(54) **WIRELESS COMMUNICATION METHOD, TERMINAL DEVICE AND NETWORK DEVICE**
DRAHTLOSKOMMUNIKATIONSVERFAHREN, ENDGERÄTEVORRICHTUNG UND NETZWERKVORRICHTUNG
PROCÉDÉ DE COMMUNICATION SANS FIL, DISPOSITIF DE TERMINAL ET DISPOSITIF DE RÉSEAU

(43) Date of publication of application: 25.10.2023
(73) Proprietor: GUANGDONG OPPO MOBILE TELECOMMUNICATIONS CORP., LTD., Dongguan, Guangdong 523860 (CN)
(72) Inventor: XING, Jinqiang, Dongguan, Guangdong 523860 (CN)
(74) Representative: Taor, Simon Edward William
(86) International application number: PCT/CN2020/141051
(87) International publication number: WO 2022/141103

(56) References cited:
- EP-A1- 3 621 218
- WO-A1-2020/252612
- CN-A- 109 587 679
- CN-A- 110 753 341
- CN-A- 110 831 184
- CN-A- 111 698 782
- US-A1- 2012 184 281
- US-A1- 2019 140 717
- US-A1- 2019 246 244
- US-A1- 2020 120 488
- US-A1- 2020 351 858
- OPPO: "Discussion on the maximal bandwidth capability supported by a UE", vol. RAN WG2, no. Vancouver, Canada; 20180122 - 20180126, 12 January 2018 (2018-01-12), XP051386230, Retrieved from the Internet <URL:http://www.3gpp.org/ftp/tsg%5Fran/WG2%5FRL2/TSGR2%5FAHs/2018%5F01%5FNR/Docs/> [retrieved on 20180112]

## Description

### TECHNICAL FIELD

The embodiments of the present disclosure relate to communication technology, and more particularly, to a wireless communication method, a terminal device and a network device.

### BACKGROUND

In the New Radio (NR) system, a terminal device can report a channel bandwidth supported by a frequency band or a bandwidth combination set supported by a frequency band combination to a network device, such that the network device can correctly configure it. The introduction of new bandwidths can be achieved by defining a new bandwidth combination set.

With the increase of the newly introduced bandwidths and frequency band combinations, this method of defining a new bandwidth combination set so as to be compatible with the newly introduced bandwidths makes it difficult for the terminal device and the network device to maintain the supported bandwidth combinations. Thus, how to report a bandwidth or bandwidth combination supported by the terminal device to simplify the maintenance at the terminal device and the network device is an urgent problem to be solved. WO2020/252612A1 discloses low-complexity physical downlink control channels and related signaling. US2012/184281A1 discloses a UE capability report method and an apparatus in mobile communication system. US2020/120488A1 discloses a communication method for bandwidth part switching, user equipment, a network device and a communications system. US2019/246244A1 discloses carrier capability signaling with regard to multiple carrier numerologies. 3GPP DRAFT R2-1800575 discusses the maximal bandwidth capability supported by a UE.

### SUMMARY

The present disclosure provides a wireless communication method, a terminal device, and a network device, via allowing the terminal device to report maximum bandwidth capability information, so as to simplify the maintenance of the bandwidth or bandwidth combination supported by the terminal device.

In a first aspect, a wireless communication method is provided. The method includes: transmitting, by a terminal device, first information to a network device, the first information being used to report a maximum bandwidth capability supported by the terminal device. The first information includes maximum bandwidth capability information of the terminal device on each of at least one frequency band. The maximum bandwidth capability information of the terminal device on each frequency band includes at least one piece of maximum bandwidth capability information each corresponding to one Sub-Carrier Spacing (SCS).

In a second aspect, a wireless communication method is provided. The method includes: receiving, by a network device, first information transmitted by a terminal device, the first information being used to determine a maximum bandwidth capability supported by the terminal device. The first information includes maximum bandwidth capability information of the terminal device on each of at least one frequency band. The maximum bandwidth capability information of the terminal device on each frequency band includes at least one piece of maximum bandwidth capability information each corresponding to one Sub-Carrier Spacing (SCS).

In a fifth aspect, a terminal device is provided. The terminal device includes a processor and a memory. The memory is configured to store a computer program, and the processor is configured to invoke and execute the computer program stored in the memory to perform the method according to the above first aspect or any implementation thereof.

In a sixth aspect, a network device is provided. The network device includes a processor and a memory. The memory is configured to store a computer program, and the processor is configured to invoke and execute the computer program stored in the memory to perform the method according to the above second aspect or any implementation thereof.

With the above technical solution, the terminal device can report the maximum bandwidth capability information to the network device, such that a newly introduced bandwidth can be forwardly compatible with existing terminals, and configuration of the newly introduced bandwidth by the network device can be supported. In addition, the signaling overhead for the terminal device to separately report capability information regarding whether each newly introduced bandwidth is supported can be reduced.

### BRIEF DESCRIPTION OF DRAWINGS

FIG. 1 is a schematic diagram showing an architecture of a communication system.
FIG. 2 is a schematic interaction diagram illustrating a wireless communication method according to an embodiment of the present disclosure.
FIG. 3 is a schematic block diagram of a terminal device according to an embodiment of the present disclosure.
FIG. 4 is a schematic block diagram of a network device according to an embodiment of the present disclosure.
FIG. 5 is a schematic block diagram of a communication device according to an embodiment of the present disclosure.
FIG. 6 is a schematic block diagram of a chip.
FIG. 7 is a schematic block diagram of a communication system.

### DESCRIPTION OF EMBODIMENTS

The technical solutions in the embodiments of the present disclosure will be described below with reference to the figure in the embodiments of the present disclosure. Obviously, the described embodiments are only some embodiments, rather than all embodiments, of the present disclosure.

The solutions according to the embodiments of the present disclosure can be applied to various communication systems, including for example: Global System of Mobile Communication (GSM), Code Division Multiple Access (CDMA) system, Wideband Code Division Multiple Access (WCDMA) system, General Packet Radio Service (GPRS), Long Term Evolution (LTE) system, Advanced Long Term Evolution (LTE-A) system, New Radio (NR) system, evolved NR system, LTE-based access to unlicensed spectrum (LTE-U) system, NR-based access to unlicensed spectrum (NR-U) system, Non-Terrestrial Network (NTN) system, Universal Mobile Telecommunication System (UMTS), Wireless Local Area Networks (WLAN), Wireless Fidelity (WiFi), the 5^{th} Generation (5G) system, or other communication systems.

Generally, traditional communication systems can support a limited number of connections and are easy to implement. However, with the development of communication technology, mobile communication systems will support not only traditional communication, but also e.g., Device to Device (D2D) communication, Machine to Machine (M2M) communication, and Machine Type Communication (MTC), Vehicle to Vehicle (V2V) communication, Vehicle to everything (V2X) communication, etc. The embodiments of the present disclosure can also be applied to these communication systems.

Optionally, the communication system of an embodiment of the present disclosure may be applied to a Carrier Aggregation (CA) scenario, a Dual Connectivity (DC) scenario, a Standalone (SA) network deployment scenario.

Optionally, the communication system of an embodiment of the present disclosure may be applied to unlicensed spectrum or shared spectrum. Alternatively, the communication system of an embodiment of the present disclosure may be applied to licensed spectrum or non-shared spectrum.

The embodiments of the present disclosure are described in conjunction with a network device and a terminal device. The terminal device may refer to a User Equipment (UE), an access terminal, a user unit, a user station, a mobile station, a mobile station, a remote station, a remote terminal, a mobile device, a user terminal, a terminal, a wireless communication device, a user agent, or a user device, etc.

The terminal device may be a station (ST) in a WLAN, a cellular phone, a cordless phone, a Session Initiation Protocol (SIP) phone, a Wireless Local Loop (WLL) station, a Personal Digital Assistant (PDA) device, a handheld device or a computing device having a wireless communication function, another processing device connected to a wireless modem, a vehicle-mounted device, a wearable device, a terminal device in the next generation communication system (e.g., NR network), or a terminal device in a future evolved Public Land Mobile Network (PLMN), etc.

In the embodiments of the present disclosure, the terminal device can be deployed on land, including indoor or outdoor, handheld, worn, or vehicle-mounted, deployed on water (e.g., on a ship, etc), or deployed in the air (e.g., on an airplane, a balloon, a satellite, etc).

In the embodiments of the present disclosure, the terminal device may be a mobile phone, a tablet computer (Pad), a computer with a wireless transceiver function, a Virtual Reality (VR) terminal device, an Augmented Reality (AR) terminal device, a wireless terminal in industrial control, a vehicle-mounted terminal device, a wireless terminal device in self driving, a wireless terminal device in remote medical, a wireless terminal device in smart grid, a wireless terminal device in transportation safety, a wireless terminal device in smart city, or a wireless terminal device in smart home, etc.

As non-limiting examples, in an embodiment of the present disclosure, the terminal device may also be a wearable device. The wearable device, also known as wearable smart device, is a general term for wearable devices that are intelligently designed and developed from everyday wear, such as glasses, gloves, watches, clothes, and shoes, etc, by applying wearable technologies. A wearable device is a portable device that can be directly worn on or integrated into a user's clothes or accessories. A wearable device is not only a kind of hardware device, but can also provide powerful functions based on software support, data interaction, and cloud interaction. In a broad sense, wearable smart devices may include full-featured, large-sized devices that can provide full or partial functions without relying on smart phones, such as smart watches or smart glasses, etc, and devices that only focus on a certain type of application function and need to cooperate with other devices such as smart phones for use, such as various smart bracelets and smart jewelries for physical sign monitoring, etc.

In an embodiment of the present disclosure, the network device may be a device communicating with mobile devices. The network device may be an Access Point (AP) in a WLAN, a base station such as Base Transceiver Station (BTS) in a GSM system or a CDMA system, a base station such as NodeB (NB) in a WCDMA system, a base station such as Evolutional Node (eNB or eNodeB) in an LTE system, or a relay station, an access point, a vehicle-mounted device, a wearable device, a network device or base station (e.g., gNB) in an NR network, a network device in a future evolved PLMN, or a network device in an NTN, etc.

As a non-limiting example, in an embodiment of the present disclosure, the network device may have mobile characteristics, e.g., the network device may be a mobile device. Optionally, the network device may be a satellite or a balloon station. For example, the satellite may be a Low Earth Orbit (LEO) satellite, a Medium Earth Orbit (MEO) satellite, a Geostationary Earth Orbit (GEO) satellite, a High Elliptical Orbit (HEO) satellite, etc. Optionally, the network device may also be a base station provided in a location such as land or water, etc.

In the embodiment of the present disclosure, the network device may provide services for a cell, and the terminal device may communicate with the network device over transmission resources, e.g., frequency domain resources or frequency spectral resources, used in the cell. The cell may be a cell corresponding to the network device (e.g., a base station). The cell may belong to a macro base station or a base station corresponding to a small cell. The small cell here may include a metro cell, a micro cell, a pico cell, a femto cell, or the like. These small cells have characteristics such as small coverage and low transmission power, and are suitable for providing high-rate data transmission services.

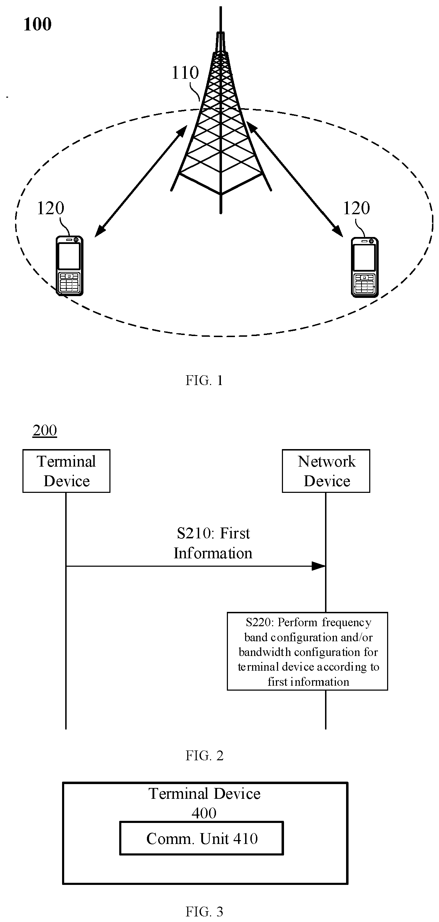

Exemplarily, FIG. 1 shows a communication system 100 in which an embodiment of the present disclosure can be applied. A shown in FIG. 1, the communication system 100 may include a network device 110 which may be a device communicating with a terminal device 120 (or referred to as communication terminal or terminal). The network device 110 may provide communication coverage for a particular geographic area, and may communicate with terminal devices located within the coverage.

FIG. 1 exemplarily shows one network device and two terminal devices. Optionally, the communication system 100 may include multiple network devices, and the coverage of each network device may include other numbers of terminal devices. The embodiment of the present disclosure is not limited to this.

Optionally, the communication system 100 may also include other network entities such as a network controller and a Mobility Management Entity (MME), etc. The embodiment of the present disclosure is not limited to this.

It can be appreciated that, in the embodiments of the present disclosure, a device having a communication function in a network/system may be referred to as a communication device. Taking the communication system 100 shown in FIG. 1 as an example, the communication devices may include the network device 110 and the terminal device 120 with communication functions. The network device 110 and the terminal device 120 may be the specific devices described above, and details thereof will be omitted here. The communication devices may also include other devices in the communication system 100, e.g., other network entities such as a network controller, an MME, etc., and the embodiment of the present disclosure is not limited to any of these examples.

In addition, the terms "system" and "network" may often be used interchangeably herein. The term "and/or" as used herein only represents a relationship between correlated objects, including three relationships. For example, "A and/or B" may mean A only, B only, or both A and B. In addition, the symbol "/" as used herein represents an "or" relationship between the correlated objects preceding and succeeding the symbol.

It can be appreciated that the term "indication" as used in the embodiments of the present disclosure may be a direct indication, an indirect indication, or an association. For example, if A indicates B, it may mean that A directly indicates B, e.g., B can be obtained from A. Alternatively, it may mean that A indicates B indirectly, e.g., A indicates C and B can be obtained from C. Alternatively, it may mean that there is an association between A and B.

In the description of the embodiments of the present disclosure, the term "corresponding" may mean that there is a direct or indirect correspondence between the two, or may mean that there is an association between the two, or that they are in a relation of indicating and indicated, configuring or configured, or the like.

In the embodiments of the present disclosure, "predefined" may implemented as pre-stored in one or more devices (for example, including a terminal device and a network device) corresponding codes, tables or other means that can be used to indicate related information, and the present disclosure is not limited to its specific implementation. For example, "predefined" may refer to defined in protocols.

In the embodiments of the present disclosure, "protocols" may refer to standard protocols in the communication field, including e.g., the LTE protocol, the NR protocol, and related protocols applied in future communication systems. The present disclosure is not limited to any of these examples.

In the 3GPP standard, supported bandwidths are defined for each frequency band, as shown in Table 1 below. The standard bandwidths are 5MHz, 10MHz, 15MHz, ..., 100MHz. Terminal devices need to support these bandwidths for communicating with network devices with a certain bandwidth. Table 1 shows the relationship between NR band, Subcarrier Spacing (SCS), and UE channel bandwidth.

**Table 1**

| NR band / SCS / UE channel bandwidth (MHz) | | | | | | | | | | | | | | |
|---|---|---|---|---|---|---|---|---|---|---|---|---|---|---|
| NR Band | SCS kHz | 5 | 10 | 15 | 20 | 25 | 30 | 40 | 50 | 60 | 70 | 80 | 90 | 100 |
| n3 | 15 | Yes | Yes | Yes | Yes | Yes | Yes | Yes | | | | | | |
| | 30 | | Yes | Yes | Yes | Yes | Yes | Yes | | | | | | |
| | 60 | | Yes | Yes | Yes | Yes | Yes | Yes | | | | | | |
| n41 | 15 | | Yes | Yes | Yes | | Yes | Yes | Yes | | | | | |
| | 30 | | Yes | Yes | Yes | | Yes | Yes | Yes | Yes | | Yes | Yes | Yes |
| | 60 | | Yes | Yes | Yes | | Yes | Yes | Yes | Yes | | Yes | Yes | Yes |

Here, n3 and n41 indicate frequency band numbers, and Yes indicates that the corresponding frequency band supports the bandwidth.

The bandwidths in Table 1 may be the same for an uplink frequency band and a downlink frequency band, that is, the uplink and downlink bandwidths are symmetrical. In addition, for some frequency bands, the corresponding uplink bandwidth and downlink bandwidth are defined asymmetrically. For example, as shown in Table 2, the uplink frequency band and the downlink frequency band support different bandwidths, respectively. In this case, a different asymmetric channel bandwidth combination set can be defined for each combination of uplink bandwidth and downlink bandwidth. If the terminal device supports this frequency band, it needs to support at least one of the uplink/downlink bandwidth sets, and report the supported bandwidth set to the network device.

**Table 2**

| NR band | Uplink channel bandwidth (MHz) | Downlink channel bandwidth (MHz) | Asymmetric channel bandwidth combination |
|---|---|---|---|
| n66 | 5, 10 | 20, 40 | 0 |
| | 20 | 40 | |
| | 5, 10 | 20, 25, 30, 40 | 1 |
| | 20, 25, 30 | 40 | |

Here, n66 represents the frequency band number.

In some scenarios, a terminal device can operate on multiple frequency bands. These frequency bands (e.g., Band A and Band B) form a frequency band combination. Each frequency band has its own supported bandwidth. When the terminal device operates in this frequency band combination, a bandwidth combination set can be introduced to indicate the bandwidth(s) supported by the terminal device for each frequency band in the frequency band combination. The terminal device can report the supported bandwidth combination set to the network device.

In some cases, e.g., for Band A, a bandwidth X is introduced. The bandwidth X may be an optional bandwidth, and not all terminal devices need to support it. If the bandwidth X is directly added to an existing bandwidth combination set, causes a problem that some terminal devices may not support it. Therefore, it is typically necessary to define a new bandwidth combination set to distinguish terminals that support the bandwidth X and the combination of the bandwidth X and other bandwidths, and terminals that do not support the bandwidth X and the combination of the bandwidth X and other bandwidths. This requires the terminal device supporting the bandwidth X to report the channel bandwidth(s) it supports for Band A or the frequency band combination for Band A.

In practice, terminal devices need to continuously update and support the newly defined bandwidth and bandwidth combination set, and report the supported bandwidth(s) and bandwidth combination set to the network device. At the same time, the network device also needs to be compatible with different terminal capabilities to determine whether they support the newly defined bandwidth X and the bandwidth combination set for correct configuration. With the increase of newly introduced bandwidths and frequency band combinations, this method of defining a new bandwidth combination set so as to be compatible with the newly introduced bandwidths makes it difficult for the terminal device and the network device to maintain the supported bandwidth combinations.

In order to facilitate understanding of the technical solutions of the embodiments of the present disclosure, the technical solutions of the present disclosure will be described in detail below with reference to specific examples. The above related technologies as optional solutions may be arbitrarily combined with the technical solutions of the embodiments of the present disclosure, and all of these combinations are to be encompassed by the scope of the embodiments of the present disclosure. The embodiments of the present disclosure include at least part of the following content.

FIG. 2 is a schematic interaction diagram illustrating a wireless communication method 200 according to an embodiment of the present disclosure. As shown in FIG. 2, the method 200 includes the following content.

At S210, a terminal device transmits first information to a network device, the first information being used to determine a maximum bandwidth capability supported by the terminal device.

Further, optionally, at S220, the network device may perform frequency band configuration and/or bandwidth configuration for the terminal device according to the first information.

Optionally, in some embodiments, the maximum bandwidth capability may include a maximum channel bandwidth capability.

By reporting the maximum bandwidth capability supported by the terminal device, in this way, when a new bandwidth is introduced, the terminal device does not need to report the capability for the newly added bandwidth, and the network device can perform bandwidth configuration for the terminal device based on the maximum bandwidth capability supported by the terminal device, thereby allowing the terminal device supporting the bandwidth to be forwardly compatible with the newly added bandwidth.

The implementation of the first information will be described below in conjunction with specific embodiments.

### Embodiment 1

In Embodiment 1, the maximum bandwidth capability information reported by the terminal device may be independent of frequency bands and frequency band combinations.

The specific implementations are described below in combination with Embodiment 1-1 and Embodiment 1-2, and the present disclosure is not limited thereto.

### Embodiment 1-1

Optionally, in some embodiments, the first information may include at least one piece of maximum bandwidth capability information.

It can be appreciated that the maximum bandwidth capability information (denoted as MaxCBW) reported by the terminal device may be different from a defined bandwidth. For example, it may be greater than the maximum bandwidth of 100MHz in Table 1. The maximum bandwidth capability information means that as long as the bandwidth configured by the network device is smaller than or equal to the maximum bandwidth capability information MaxCBW, then the terminal device can support the bandwidth, and the network device can configure the bandwidth for the terminal device.

For example, if the maximum bandwidth capability information MaxCBW reported by the terminal device is 80MHz, then when a new bandwidth of 70MHz is introduced, the network device can configure the 70MHz bandwidth for the terminal device. When a new bandwidth of 90MHz is introduced, since which exceeds the maximum bandwidth capability information MaxCBW of the terminal device, the network device cannot configure this bandwidth for the terminal device.

Therefore, the reporting scheme based on the embodiment of the present disclosure can allow the existing terminal to be forwardly compatible with the newly introduced bandwidth (for example, a bandwidth smaller than the maximum bandwidth capability MaxCBW of the terminal device), and support configuration of the newly added bandwidth by the network device. At the same time, the signaling overhead for the terminal device to separately report the capability information regarding whether each newly introduced bandwidth is supported can be reduced. It can be appreciated that the existing terminal here may be a terminal device compatible with (or in other words, supporting) the newly introduced bandwidth.

Optionally, the at least one piece of maximum bandwidth capability information may correspond to all frequency bands and/or all frequency band combinations of the terminal device. That is, the maximum bandwidth capability information of the terminal device may be applicable to all frequency bands and/or all frequency band combinations.

As an example, the first information may include first maximum bandwidth capability information, and the first maximum bandwidth capability information may be applicable to all frequency bands.

As an example, the first information may include second maximum bandwidth capability information, and the second maximum bandwidth capability information may be applicable to all frequency band combinations.

Optionally, the first maximum bandwidth capability information and the second maximum bandwidth capability information may be same maximum bandwidth capability information that is applicable to all frequency bands and all frequency band combinations.

Optionally, in some embodiments, the at least one piece of maximum bandwidth capability information may include a plurality of pieces of maximum bandwidth capability information corresponding to a plurality of frequency band groups, respectively, and each maximum bandwidth capability information may correspond to one frequency band group. Each frequency band group includes at least one frequency band. That is, the terminal device can report the maximum bandwidth capability information in units of frequency band groups.

Optionally, in some embodiments, the first information may include maximum bandwidth capability information at granularity of Subcarrier Spacings (SCSs). For example, the first information may include maximum bandwidth capability information corresponding to each of at least one SCS.

Optionally, the maximum bandwidth capability information corresponding to each SCS may be same or different.

Optionally, in some embodiments, the first information may include maximum bandwidth capability information at granularity of uplink/downlink. For example, the first information may include maximum uplink bandwidth capability information and/or maximum downlink bandwidth capability information.

It can be appreciated that, in an embodiment of the present disclosure, the maximum uplink bandwidth capability information and the maximum downlink bandwidth capability information may be same or different.

As an example, the first information may include first maximum uplink bandwidth capability information, and the first maximum uplink bandwidth capability information may be applicable to all uplink frequency bands or uplink frequency band combinations.

As another example, the first information may include first maximum downlink bandwidth capability information, and the first maximum downlink bandwidth capability information may be applicable to all downlink frequency bands or downlink frequency band combinations.

Optionally, in some embodiments, the first information may include maximum bandwidth capability information at granularity of SCSs and uplink/downlink.

As an example, the first information may include a maximum uplink bandwidth capability information set and/or a maximum downlink bandwidth capability information set. The maximum uplink bandwidth capability information set includes at least one piece of maximum uplink bandwidth capability information each corresponding to one SCS. The maximum downlink bandwidth capability information set includes at least one piece of maximum downlink bandwidth capability information each corresponding to one SCS.

To summarize, in this Embodiment 1-1, the maximum bandwidth capability information reported by the terminal device may be the maximum bandwidth capability independent of frequency bands and frequency band combinations, and the maximum bandwidth capability independent of frequency bands and frequency band combinations may or may be independent of SCSs and/or uplink/downlink. The present disclosure is not limited to any of these examples.

It should be noted that in the embodiments of the present disclosure, unless otherwise specified, the maximum bandwidth capability information in the embodiments of the present disclosure may or may not be independent of SCSs and/or uplink/downlink.

Optionally, in some embodiments, if the terminal device does not report the maximum bandwidth capability information supported by the terminal device, it may mean that the maximum bandwidth capability supported by the terminal device is a default value, for example, 50MHz, or the terminal device does not support reporting of the maximum bandwidth capability.

### Embodiment 1-2

Optionally, in some embodiments, the first information may include all bandwidths supportable by the terminal device.

It can be appreciated that all bandwidths supportable by the terminal device may include bandwidths supported by the capabilities of the terminal device, and all bandwidths may include undefined bandwidths. For example, a defined maximum bandwidth may be 100 MHz, and if the capabilities of the terminal device can support 120MHz, then all bandwidths supportable by the terminal device may include 120MHz.

In some embodiments, all bandwidths supportable by the terminal device may be independent of SCS.

In some other embodiments, all bandwidths supportable by the terminal device may have granularity of SCSs.

For example, the first information may include all bandwidths supportable by the terminal device for each of at least one SCS.

In some embodiments, all bandwidths supportable by the terminal device may be independent of uplink and downlink.

In some other embodiments, all bandwidths supportable by the terminal device may be dependent on uplink and downlink.

For example, the first information may include all uplink bandwidths supported by the terminal device and/or all downlink bandwidths supported by the terminal device.

### Embodiment 1-3

The first information may include indication information indicating whether the terminal device supports all bandwidths.

Optionally, all bandwidths may include all predefined bandwidths, such as 5MHz-50MHz. Alternatively, all bandwidths defined in the standard may be included, for example, all bandwidths in Table 1 may be included.

### Embodiment 2

In Embodiment 2, the terminal device reports the maximum bandwidth capability information at granularity of frequency bands.

The specific implementations will be described below with reference to Embodiment 2-1 to Embodiment 2-3, and the present disclosure is not limited thereto.

### Example 2-1

The first information includes maximum bandwidth capability information of the terminal device on each of at least one frequency band. Optionally, the at least one frequency band may include part or all of frequency bands supported by the network device.

Optionally, in some embodiments, the maximum bandwidth capability information of the terminal device on each frequency band may be independent of SCSs.

In some other embodiments, the maximum bandwidth capability information of the terminal device on each frequency band includes maximum bandwidth capability information at granularity of SCSs. The maximum bandwidth capability information on each frequency band includes at least one piece of maximum bandwidth capability information each corresponding to one SCS. Optionally, the maximum bandwidth capability corresponding to each SCS may be same or different.

Optionally, in some embodiments, the maximum bandwidth capability information of the terminal device on each frequency band may be independent of uplink and downlink.

In some other embodiments, the maximum bandwidth capability information on each frequency band may include maximum bandwidth capability information at granularity of uplink/downlink. For example, the maximum bandwidth capability information on each frequency band may include maximum uplink bandwidth capability information and/or maximum downlink bandwidth capability information of the terminal device on each frequency band.

Optionally, the maximum uplink bandwidth capability and the maximum downlink bandwidth capability of the terminal device on each frequency band may be same or different.

Optionally, in some embodiments, the maximum bandwidth capability information of the terminal device on each frequency band may include maximum bandwidth capability information at granularity of SCSs and uplink/downlink. That is, the maximum bandwidth capability information of the terminal device on each frequency band may be dependent on both SCS and uplink/downlink.

As an example, the maximum bandwidth capability information of the terminal device on each frequency band may include a set of first maximum uplink bandwidth capability information and/or a set of first maximum downlink bandwidth capability information. The set of first maximum uplink bandwidth capability information includes at least one piece of first maximum uplink bandwidth capability information, which is the maximum uplink bandwidth capability of the terminal device on each frequency band. Each first maximum uplink bandwidth capability corresponds to an SCS. The set of first maximum downlink bandwidth capability information includes at least one piece of first maximum downlink bandwidth capability information, which is the maximum downlink bandwidth capability of the terminal device on each frequency band. Each first maximum downlink bandwidth capability corresponds to an SCS.

Therefore, in the Embodiment 2-1, the maximum bandwidth capability on each frequency band reported by the terminal device may be the maximum bandwidth capability independent of SCSs and uplink and downlink, or may have the granularity of SCSs and/or uplink/downlink. The present disclosure is not limited to this.

An example will be given here regarding bandwidths supported by the terminal device in Band A at 15khz SCS (other SCSs such as 30KHz, 60KHz, etc., will be similar). It is assumed that the bandwidth supported by the terminal device in Band A at 15khz SCS is shown in Table 3. Here, Band A at 15KHz SCS defines channel bandwidths in 5~50MHz, and in the related art, the capability information reported by the terminal device only includes these bandwidths.

**Table 3**

| NR Band / SCS / UE Channel Bandwidth (MHz) | | | | | | | | | | | | | | |
|---|---|---|---|---|---|---|---|---|---|---|---|---|---|---|
| NR Band | SCS kHz | 5 | 10 | 15 | 20 | 25 | 30 | 40 | 50 | 60 | 70 | 80 | 90 | 100 |
| A | 15 | Yes | Yes | Yes | Yes | Yes | Yes | Yes | Yes | | | | | |

Assuming that new bandwidths of 70MHz and 90MHz are introduced in Band A, then for the newly introduced bandwidths, terminal devices currently on the market cannot use these two bandwidths, because the capability information reported by them does not include the two newly added bandwidths of 70MHz and 90MHz.

When a new bandwidth is introduced, the current solution is to define new bandwidth capability information such as 70MHz_support and 90MHz_support, for the terminal device to report whether it supports the bandwidth.

In an embodiment of the disclosure, it is assumed that the terminal device only needs to report the maximum bandwidth capability it supports, such as 80MHz, instead of reporting the capability for each newly introduced bandwidth. Correspondingly, the network device can determine that the terminal device supports 70MHz, but does not support 90MHz, according to the maximum bandwidth capability. That is, the bandwidth actually supported by the terminal device is shown in Table 4:

**Table 4**

| NR Band / SCS / UE Channel Bandwidth (MHz) | | | | | | | | | | | | | | |
|---|---|---|---|---|---|---|---|---|---|---|---|---|---|---|
| NR Band | SCS kHz | 5 | 10 | 15 | 20 | 25 | 30 | 40 | 50 | 60 | 70 | 80 | 90 | 100 |
| A | 15 | Yes | Yes | Yes | Yes | Yes | Yes | Yes | Yes | | Yes | | | |

Further, when performing bandwidth configuration, the network device may configure 70MHz for the terminal device.

Therefore, the reporting scheme based on the embodiment of the present disclosure can allow existing terminals to be forwardly compatible with the newly introduced bandwidth (for example, the bandwidth smaller than the maximum bandwidth capability MaxCBW of the terminal device) and support the configuration of the newly added bandwidth by the network device. At the same time, the signaling overhead for the terminal device to separately report the capability information indicating whether each newly introduced bandwidth is supported can be reduced.

### Embodiment 2-2

Optionally, in some embodiments, the first information may include all bandwidths supportable by the terminal device on each of at least one frequency band.

It can be appreciated that all bandwidths supportable by the terminal device on a certain frequency band may include bandwidths supported by the capability of the terminal device on this frequency band, including undefined bandwidths. For example, the defined maximum bandwidth on the frequency band is 100MHz. If the capability of the terminal device on this frequency band can support 120MHz, then all bandwidths supportable by the terminal device in this frequency band can include 120MHz.

In some embodiments, all bandwidths supportable by the terminal device on each frequency band may be independent of SCS. In some other embodiments, all bandwidths supportable by the terminal device on each frequency band may have the granularity of SCSs.

In some embodiments, all bandwidths supportable by the terminal device on each frequency band may be independent of uplink and downlink. In some other embodiments, all bandwidths supportable by the terminal device on each frequency band may be dependent on uplink and downlink.

### Embodiment 2-3

Optionally, in some embodiments, the first information may include indication information indicating whether the terminal device supports all bandwidths on each of at least one frequency band.

As an example, the terminal device reports information whether all bandwidths on each frequency band are supported via a bitmap. For example, the first information may include a first bitmap that includes at least one bit each corresponding to a frequency band and having its value indicating whether all bandwidths on the corresponding frequency band are supported.

Optionally, all bandwidths corresponding to each frequency band may include predefined bandwidths, such as 5MHz-50MHz, or all defined bandwidths corresponding to the frequency band in the standard, e.g., including all bandwidths in Table 1, that is, 5MHz∼100MHz.

Optionally, all bandwidths corresponding to each frequency band may be same or different, e.g., both may be 5~100MHz.

Optionally, in some embodiments, the terminal device not reporting the maximum bandwidth capability information corresponding to a certain frequency band may indicate that the maximum bandwidth capability supported by the frequency band is a default value, for example, 50MHz.

For example, if the first information does not include the maximum bandwidth capability information corresponding to a first frequency band, it indicates that the maximum bandwidth capability supported by the terminal device on the first frequency band is a specific bandwidth capability, for example, 50 MHz.

Optionally, in some embodiments, the maximum bandwidth capability information of the terminal device on a second frequency band may include a set of maximum bandwidth capability information, and the set of maximum bandwidth capability information may correspond to all frequency band combinations including the second frequency band. Alternatively, the maximum bandwidth capability information of the terminal device on the second frequency band may include a plurality of sets of maximum bandwidth capability information, and each set of maximum bandwidth capability information may correspond to at least one frequency band combination including the second frequency band.

That is, when the terminal device reports the maximum bandwidth capability at the granularity of frequency bands, it may report the maximum bandwidth capability information of the frequency band in the frequency band combination including the frequency band.

Optionally, in some embodiments, each set of maximum bandwidth capability information may include maximum bandwidth capability information corresponding to different SCSs, and/or maximum bandwidth capability information corresponding to uplink and downlink respectively, etc.

It can be appreciated that in the embodiment of the present disclosure, the maximum bandwidth capability information corresponding to a single frequency band may be same as or different from the maximum bandwidth capability information of the frequency band in the frequency band combination, and the present disclosure is not limited to thereto.

For example, for a frequency band (such as Band A), the terminal device can report a maximum bandwidth capability MaxCBW_A, corresponding to all different frequency band combinations including Band_A, such as Band A + Band B, Band A + Band C, Band A + Band D, Band A + Band B + Band C, Band A + Band B + Band D, etc. Alternatively, the terminal devices can report a plurality of maximum bandwidth capabilities (such as MaxCBW_A1, MaxCBW_A2, etc.) corresponding to different frequency band combinations including Band A, e.g., MaxCBW_A1 corresponds to Band A + Band B, Band A + Band C, and Band A + Band D, and MaxCBW_A2 corresponds to Band A + Band B + Band C, Band A + Band B + Band D, and so on.

### Embodiment 3

In Embodiment 3, the terminal device may report the maximum bandwidth capability information at granularity of frequency band combinations.

Optionally, in some embodiments, the first information may include maximum bandwidth capability information of the terminal device on each of at least one frequency band combination. Each frequency band combination includes at least two frequency bands.

Optionally, in some embodiments, the at least one frequency band combination may include a combination of frequency bands supported by the terminal device.

The specific implementations will be described below with reference to Embodiment 3-1 to Embodiment 3-4, and the present disclosure is not limited thereto.

### Embodiment 3-1

Optionally, in some embodiments, the maximum bandwidth capability information of the terminal device on each frequency band combination may include maximum bandwidth capability information of the terminal device on each frequency band in each frequency band combination.

It can be appreciated that in the embodiment of the present disclosure, the maximum bandwidth capability information corresponding to a single frequency band may be same as or different from the maximum bandwidth capability information of the frequency band in the frequency band combination, and the present disclosure is not limited thereto.

Optionally, in some embodiments, the maximum bandwidth capability information of the terminal device on each frequency band in each frequency band combination may be independent of SCSs.

In some other embodiments, the maximum bandwidth capability information of the terminal device on each frequency band in each frequency band combination may include the maximum bandwidth capability at granularity of SCSs. For example, the maximum bandwidth capability information of the terminal device on each frequency band in each frequency band combination may include at least one piece of maximum bandwidth capability information each corresponding to one SCS.

Optionally, in some embodiments, the maximum bandwidth capability information of the terminal device on each frequency band in each frequency band combination may be independent of uplink and downlink. In some other embodiments, the maximum bandwidth capability information of the terminal device on each frequency band in each frequency band combination may include maximum bandwidth capability information at granularity of uplink/downlink. For example, the maximum bandwidth capability information of the terminal device on each frequency band in each frequency band combination may include maximum uplink bandwidth capability information and/or maximum downlink bandwidth capability information on each frequency band in each frequency band combination.

Optionally, in some embodiments, the maximum bandwidth capability information of the terminal device on each frequency band in each frequency band combination may include maximum bandwidth capability information at granularity of SCSs and uplink/downlink. That is, the maximum bandwidth capability information of the terminal device on each frequency band in each frequency band combination may be dependent on SCSs and uplink and downlink.

Optionally, in some embodiments, for a frequency band, the terminal device may report a set of maximum bandwidth capability information corresponding to the frequency band, and the set of maximum bandwidth capability information may correspond to all frequency band combinations including the frequency band. Alternatively, the terminal device may report a plurality of sets of maximum bandwidth capability information corresponding to the frequency band, and each set of maximum bandwidth capability information may correspond to at least one frequency band combination including the second frequency band.

It can be appreciated that each set of maximum bandwidth capability information may be maximum downlink bandwidth capabilities independent of SCSs and uplink and downlink, or may have the granularity of SCSs and/or uplink/downlink, and the present disclosure is not limited to this.

To summarize, in the Embodiment 3-1, the maximum bandwidth capability on each frequency band in each frequency band combination reported by the terminal device may be the maximum bandwidth capability independent of SCSs and uplink and downlink, or may have the granularity of SCSs and/or uplink/downlink, and the present disclosure is not limited to this.

In related art, a bandwidth combination supported by a frequency band combination is implemented by setting a new bandwidth combination set. Table 5 shows supported bandwidth combinations in frequency band combination A+B at 15KHz SCS. Specifically, Band A supports 5MHz~50MHz, and Band B supports 5MHz~20MHz. This bandwidth combination set is defined as Bandwidth combination set 0.

**Table 5**

| Band combination | NR Band | SCS kHz | 5 | 10 | 15 | 20 | 25 | 30 | 40 | 50 | 60 | 70 | 80 | 90 | 100 | Bandwidth combination set |
|---|---|---|---|---|---|---|---|---|---|---|---|---|---|---|---|---|
| A+B | A | 15 | Yes | Yes | Yes | Yes | Yes | Yes | Yes | Yes | | | | | | 0 |
| | B | 15 | Yes | Yes | Yes | Yes | | | | | | | | | | |

When a new bandwidth is introduced in Band A and/or Band B, according to the existing scheme, a new bandwidth combination set, for example, Bandwidth combination set 1, needs to be defined to include the new bandwidth. For example, if 70MHz and 90MHz are newly introduced in Band A, then Bandwidth combination set 1 needs to be defined as follows. For terminals already on the market, the existing scheme cannot support the newly added Bandwidth combination set 1, because the reported bandwidth capability only includes Bandwidth combination set 0.

In an embodiment of the present disclosure, the forward compatibility with the newly introduced bandwidth or bandwidth combination can be achieved by reporting the maximum bandwidth capability information for each frequency band in the frequency band combination, thereby reducing the signaling overhead required for reporting the supported bandwidth combination capability information each time a new bandwidth is introduced.

In the above example, the maximum bandwidth capability supported by the terminal device on Band A in the Band A + Band B combination is assumed to be 80MHz, then in the Band A + Band B combination, the terminal device can support the newly introduced 70MHz which constitutes a bandwidth combination set with the bandwidths supported on Band B, i.e., support Bandwidth combination set 1 in Table 6. Since 90MHz exceeds the maximum bandwidth capability of 80MHz supported on Band A in the Band A + Band B combination, therefore, 90MHz is not included in Bandwidth combination set 1 below.

**Table 6**

| Band combination | NR Band | SCS kHz | 5 | 10 | 15 | 20 | 25 | 30 | 40 | 50 | 60 | 70 | 80 | 90 | 100 | Bandwidth Combination Set |
|---|---|---|---|---|---|---|---|---|---|---|---|---|---|---|---|---|
| A+B | A | 15 | Yes | Yes | Yes | Yes | Yes | Yes | Yes | Yes | | | | | | 0 |
| | B | 15 | Yes | Yes | Yes | Yes | | | | | | | | | | |
| A+B | A | 15 | Yes | Yes | Yes | Yes | Yes | Yes | Yes | Yes | | Yes | | | | 1 |
| | B | 15 | Yes | Yes | Yes | Yes | | | | | | | | | | |

It can be appreciated that the above example is described for a case where a new bandwidth is introduced in Band A only. When a new bandwidth is also introduced in Band B, the processing scheme is the same as that for Band A. For example, when new bandwidths of 30MHz and 50MHz are introduced in Band B, and the maximum bandwidth capability supported by the terminal device on Band B in the Band A + Band B combination is 40MHz, then the terminal device can support the newly introduced 30MHz on Band B, but not 50MHz. Therefore, the bandwidth combination set actually supported by the terminal device is equivalent to Bandwidth combination set 1 shown in Table 7.

**Table 7**

| Band combination | NR Band | SCS kHz | 5 | 10 | 15 | 20 | 25 | 30 | 40 | 50 | 60 | 70 | 80 | 90 | 100 | Bandwidth Combination Set |
|---|---|---|---|---|---|---|---|---|---|---|---|---|---|---|---|---|
| A+B | A | 15 | Yes | Yes | Yes | Yes | Yes | Yes | Yes | Yes | | | | | | 0 |
| | B | 15 | Yes | Yes | Yes | Yes | | | | | | | | | | |
| A+B | A | 15 | Yes | Yes | Yes | Yes | Yes | Yes | Yes | Yes | | Yes | | | | 1 |
| | B | 15 | Yes | Yes | Yes | Yes | | Yes | | | | | | | | |

### Embodiment 3-2

Optionally, in some embodiments, the maximum bandwidth capability information of the terminal device on each frequency band combination may include: all bandwidths supportable by the terminal device on each frequency band in each frequency band combination.

It can be appreciated that all bandwidths supportable by the terminal device on a certain frequency band may include bandwidths supported by the capability of the terminal device on this frequency band, including undefined bandwidths. For example, the defined maximum bandwidth on the frequency band is 100MHz. If the capability of the terminal device on this frequency band can support 120MHz, then all bandwidths supportable by the terminal device in this frequency band can include 120MHz.

In some embodiments, all bandwidths supportable by the terminal device on each frequency band in each frequency band combination may be independent of SCSs. In some other embodiments, all bandwidths supportable by the terminal device on each frequency band in each frequency band combination may have the granularity of SCSs.

In some embodiments, all bandwidths supportable by the terminal device on each frequency band in each frequency band combination may be independent of uplink and downlink. In some other embodiments, all bandwidths supportable by the terminal device on each frequency band in each frequency band combination may be dependent on uplink and downlink.

### Embodiment 3-3

Optionally, in some embodiments, the maximum bandwidth capability information of the terminal device on each frequency band combination includes indication information indicating whether the terminal device supports all bandwidths on each frequency band in each frequency band combination.

Optionally, all bandwidths corresponding to each frequency band may include predefined bandwidths, such as 5MHz-50MHz, or all defined bandwidths corresponding to the frequency band in the standard, e.g., including all bandwidths in Table 1, that is, 5MHz∼100MHz.

Optionally, all bandwidths corresponding to each frequency band may be same or different, e.g., both may be 5~100MHz.

As an example, the terminal device reports information indicating whether the terminal device supports all bandwidths on each frequency band in each frequency band combination via a bitmap. For example, the first information may include a second bitmap that includes a plurality of bits. Each frequency band combination corresponds to at least two bits, and the value of each of the at least two bits corresponds to a frequency band in the frequency band combination, and the value of each bit indicates whether all bandwidths are supported in the corresponding frequency band.

### Embodiment 3-4

Optionally, in some embodiments, the maximum bandwidth capability information of the terminal device on each frequency band combination may include a sum of maximum bandwidth capabilities of the terminal device on all frequency bands in each frequency band combination.

For example, the maximum bandwidth capability of the terminal device on Band A in Band A + Band B is MaxCBW_A, and the maximum bandwidth capability on Band B in Band A + Band B is MaxCBW_B. In one implementation, the terminal device can report MaxCBW_A and MaxCBW_B. In another implementation, the terminal device can report its total maximum channel capability in Band A + Band B, i.e., MaxCBW_A + MaxCBW_B. The network device only needs to configure a bandwidth in Band A and a bandwidth in Band B, as long as their sum is smaller than or equal to MaxCBW_A + MaxCBW_B. This reporting scheme is more flexible than the reporting scheme of reporting the maximum bandwidth capability of each frequency band in the above embodiment, and can facilitate reduction of signaling overhead.

### Embodiment 4

Optionally, the first information may include maximum bandwidth capability information supported by the terminal device in at least one operation state.

It can be appreciated that in some scenarios, the maximum bandwidth capability supported by the terminal device is generally dependent on the operation state of the terminal device. That is, the maximum bandwidth capability supported by the terminal device may be different in different operation states. Therefore, in some embodiments, the terminal device can report the maximum bandwidth capability in at least one operation state, so that the network device can properly configure the terminal device based on the current operation state of the terminal device.

Optionally, in some embodiments, the operation state may include a Multiple Input Multiple Output (MIMO) operation state, or may alternatively include other performance parameters or operation state parameters that may affect the bandwidth capability of the terminal device, and the present disclosure is not limited thereto.

As an example, for Band A in the frequency band combination Band A + Band B, when Band A operates at less than X-stream MIMO (X is smaller than 4, such as 1 or 2, etc.), the maximum bandwidth capability on Band A is 90MHz. When Band A operates in 4-stream MIMO, the maximum bandwidth capability on Band A is 70MHz. Therefore, the terminal device can report the maximum bandwidth capability in Band A in Band A + Band B as 70MHz, corresponding to the operation state of less than 4-stream MIMO or 90MHz, corresponding to the operation state of 4-stream MIMO.

It can be appreciated that the maximum bandwidth capability supported by the terminal device in Embodiment 4 may be implemented by using any one or more of Embodiments 1 to 3 above.

It can also be appreciated that the implementations of the first information in the above Embodiment 1 to Embodiment 4 may be implemented independently, or in combination, the present disclosure is not limited thereto.

Optionally, in some embodiments, the terminal device may report second information to the network device. The second information indicates at least one operation state of the terminal device. When the network device configures a frequency band and/or bandwidth for the terminal device, it may consider the current operation state of the terminal device, so as to perform appropriate configuration.

The method embodiments of the present disclosure have been described in detail above with reference to FIG. 2, and the apparatus embodiments of the present disclosure will be described in detail below with reference to FIG. 3 to FIG. 7. It can be appreciated that the apparatus embodiments and the method embodiments correspond to each other, and for similar descriptions, reference can be made to the method embodiments.

FIG. 3 shows a schematic block diagram of a terminal device 400 according to an embodiment of the present disclosure. As shown in FIG. 3, the terminal device 400 includes:
a communication unit 410 configured to transmit first information to a network device, the first information being used to determine a maximum bandwidth capability supported by the terminal device.

Optionally, in some embodiments, the first information may include at least one of:
at least one piece of maximum bandwidth capability information;
all bandwidths supportable by the terminal device; and
indication information indicating whether the terminal device supports all bandwidths.

Optionally, in some embodiments, the at least one piece of maximum bandwidth capability information may include maximum bandwidth capability information corresponding to each of at least one Sub-Carrier Spacing (SCS).

Optionally, in some embodiments, the at least one piece of maximum bandwidth capability information may include maximum uplink bandwidth capability information and/or maximum downlink bandwidth capability information.

Optionally, in some embodiments, the at least one piece of maximum bandwidth capability information may correspond to all frequency bands and/or all frequency band combinations of the terminal device.

The first information includes maximum bandwidth capability information of the terminal device on each of at least one frequency band. Optionally, in some embodiments, the first information may further include at least one of:
all bandwidths supportable by the terminal device on each of the at least one frequency band; and
indication information indicating whether the terminal device supports all bandwidths on each of the at least one frequency band.

The maximum bandwidth capability information of the terminal device on each frequency band includes at least one piece of maximum bandwidth capability information each corresponding to one SCS.

Optionally, in some embodiments, the maximum bandwidth capability information of the terminal device on each frequency band may include maximum uplink bandwidth capability information and/or maximum downlink bandwidth capability information of the terminal device on each frequency band.

Optionally, in some embodiments, the first information including no maximum bandwidth capability information corresponding to a first frequency band may indicate that a maximum bandwidth capability supported on the first frequency band is a specific bandwidth capability.

Optionally, in some embodiments, the maximum bandwidth capability information of the terminal device on a second frequency band may include a set of maximum bandwidth capability information, and the set of maximum bandwidth capability information corresponds to all frequency band combinations including the second frequency band; or
the maximum bandwidth capability information of the terminal device on the second frequency band may include a plurality of sets of maximum bandwidth capability information, and each set of maximum bandwidth capability information corresponds to at least one frequency band combination including the second frequency band.

Optionally, in some embodiments, the first information may include maximum bandwidth capability information of the terminal device on each of at least one frequency band combination, each frequency band combination including at least two frequency bands.

Optionally, in some embodiments, the maximum bandwidth capability information of the terminal device on each frequency band combination may include at least one of:
maximum bandwidth capability information of the terminal device on each frequency band in each frequency band combination;
all bandwidths supportable by the terminal device on each frequency band in each frequency band combination;
indication information indicating whether the terminal device supports all bandwidths on each frequency band in each frequency band combination; and
a sum of maximum bandwidth capabilities of the terminal device on all frequency bands in each frequency band combination.

Optionally, in some embodiments, the maximum bandwidth capability information of the terminal device on each frequency band combination may include at least one piece of maximum bandwidth capability information each corresponding to one SCS.

Optionally, in some embodiments, the maximum bandwidth capability information of the terminal device on each frequency band combination may include maximum uplink bandwidth capability information and/or maximum downlink bandwidth capability information of the terminal device on each frequency band combination.

Optionally, in some embodiments, the first information may include maximum bandwidth capability information supported by the terminal device in at least one operation state.

Optionally, in some embodiments, the operation state may include a Multiple Input Multiple Output (MIMO) operation state.

Optionally, in some embodiments, the above communication unit may be a communication interface or a transceiver, or an input/output interface of a communication chip or a system-on-chip. The above processing unit may be one or more processors.

It can be appreciated that the terminal device 400 according to the embodiment of the present disclosure may correspond to the terminal device in the method embodiment of the present disclosure, and the above and other operations and/or functions of the respective units in the terminal device 400 are provided for the purpose of implementing the process flow corresponding to the terminal device in the method 200 shown in FIG. 2, and details thereof will be not omitted here for brevity.

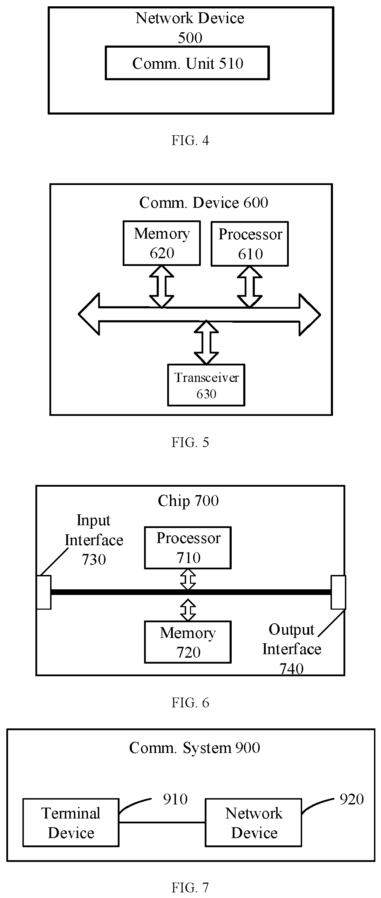

FIG. 4 shows a schematic block diagram of a network device according to an embodiment of the present disclosure. As shown in FIG. 4, the network device 500 includes:
a communication unit 510 configured to receive first information transmitted by a terminal device, the first information being used to determine a maximum bandwidth capability supported by the terminal device.

Optionally, in some embodiments, the first information may include at least one of:
at least one piece of maximum bandwidth capability information;
all bandwidths supportable by the terminal device; and
indication information indicating whether the terminal device supports all bandwidths.

Optionally, in some embodiments, the at least one piece of maximum bandwidth capability information may include maximum bandwidth capability information corresponding to each of at least one Sub-Carrier Spacing (SCS).

Optionally, in some embodiments, the at least one piece of maximum bandwidth capability information may include maximum uplink bandwidth capability information and/or maximum downlink bandwidth capability information.

Optionally, in some embodiments, the at least one piece of maximum bandwidth capability information may correspond to all frequency bands and/or all frequency band combinations of the terminal device.

The first information includes maximum bandwidth capability information of the terminal device on each of at least one frequency band. Optionally, in some embodiments, the first information may further include at least one of:
all bandwidths supportable by the terminal device on each of the at least one frequency band; and
indication information indicating whether the terminal device supports all bandwidths on each of the at least one frequency band.

The maximum bandwidth capability information of the terminal device on each frequency band includes at least one piece of maximum bandwidth capability information each corresponding to one SCS.

Optionally, in some embodiments, the maximum bandwidth capability information of the terminal device on each frequency band may include maximum uplink bandwidth capability information and/or maximum downlink bandwidth capability information of the terminal device on each frequency band.

Optionally, in some embodiments, the first information including no maximum bandwidth capability information corresponding to a first frequency band may indicate that a maximum bandwidth capability supported on the first frequency band is a specific bandwidth capability.

Optionally, in some embodiments, the maximum bandwidth capability information of the terminal device on a second frequency band may include a set of maximum bandwidth capability information, and the set of maximum bandwidth capability information corresponds to all frequency band combinations including the second frequency band; or
the maximum bandwidth capability information of the terminal device on the second frequency band may include a plurality of sets of maximum bandwidth capability information, and each set of maximum bandwidth capability information may correspond to at least one frequency band combination including the second frequency band.

Optionally, in some embodiments, the first information may include maximum bandwidth capability information of the terminal device on each of at least one frequency band combination, each frequency band combination including at least two frequency bands.

Optionally, in some embodiments, the maximum bandwidth capability information of the terminal device on each frequency band combination may include at least one of:
maximum bandwidth capability information of the terminal device on each frequency band in each frequency band combination;
all bandwidths supportable by the terminal device on each frequency band in each frequency band combination;
indication information indicating whether the terminal device supports all bandwidths on each frequency band in each frequency band combination; and
a sum of maximum bandwidth capabilities of the terminal device on all frequency bands in each frequency band combination.

Optionally, in some embodiments, the maximum bandwidth capability information of the terminal device on each frequency band combination may include at least one piece of maximum bandwidth capability information each corresponding to one SCS.

Optionally, in some embodiments, the maximum bandwidth capability information of the terminal device on each frequency band combination may include maximum uplink bandwidth capability information and/or maximum downlink bandwidth capability information of the terminal device on each frequency band combination.

Optionally, in some embodiments, the first information may include maximum bandwidth capability information supported by the terminal device in at least one operation state.

Optionally, in some embodiments, the operation state may include a Multiple Input Multiple Output (MIMO) operation state.

Optionally, in some embodiments, the network device 500 may further include:
a processing unit configured to perform frequency band configuration and/or bandwidth configuration for the terminal device according to the first information.

Optionally, in some embodiments, the above communication unit may be a communication interface or a transceiver, or an input/output interface of a communication chip or a system-on-chip. The above processing unit may be one or more processors.

It can be appreciated that the network device 500 according to the embodiment of the present disclosure may correspond to the network device in the method embodiment of the present disclosure, and the above and other operations and/or functions of the respective units in the network device 500 are provided for the purpose of implementing the process flow corresponding to the network device in the method 200 shown in FIG. 2, and details thereof will be not omitted here for brevity.

FIG. 5 is a schematic diagram showing a structure of a communication device 600 according to an embodiment of the present disclosure. The communication device 500 shown in FIG. 5 includes a processor 610, and the processor 610 can invoke and execute a computer program from a memory to implement the method in the embodiment of the present disclosure.

Optionally, as shown in FIG. 5, the communication device 600 may further include a memory 620. The processor 610 can invoke and execute a computer program from the memory 620 to implement the method in the embodiment of the present disclosure.

Here, the memory 620 may be a separate device independent from the processor 610, or may be integrated in the processor 610.

Optionally, as shown in FIG. 5, the communication device 600 may further include a transceiver 630, and the processor 610 may control the transceiver 630 to communicate with other devices, and in particular, transmit information or data to other devices, or receive information or data transmitted by other devices.

Here, the transceiver 630 may include a transmitter and a receiver. The transceiver 630 may further include one or more antennas.

Optionally, the communication device 600 may specifically be the network device according to the embodiment of the present disclosure, and the communication device 600 may implement the corresponding processes implemented by the network device in any of the methods according to the embodiments of the present disclosure. For the sake of brevity, details thereof will be omitted here.

Optionally, the communication device 600 may specifically be the mobile terminal/terminal device according to the embodiment of the present disclosure, and the communication device 600 may implement the corresponding processes implemented by the mobile terminal/terminal device in any of the methods according to the embodiments of the present disclosure. For the sake of brevity, details thereof will be omitted here.

FIG. 6 is a schematic diagram showing a structure of a chip according to an embodiment of the present disclosure. The chip 700 shown in FIG. 6 includes a processor 710, and the processor 710 can invoke and execute a computer program from a memory to implement the method in the embodiment of the present disclosure.

Optionally, as shown in FIG. 6, the chip 700 may further include a memory 720. Here, the processor 710 can invoke and execute a computer program from the memory 720 to implement the method in the embodiment of the present disclosure.

Here, the memory 720 may be a separate device independent from the processor 710, or may be integrated in the processor 710.

Optionally, the chip 700 may further include an input interface 730. Here, the processor 710 can control the input interface 730 to communicate with other devices or chips, and in particular, may obtain information or data transmitted by other devices or chips.

Optionally, the chip 700 may further include an output interface 740. Here, the processor 710 can control the output interface 740 to communicate with other devices or chips, and in particular, output information or data to other devices or chips.

Optionally, the chip can be applied to the network device in the embodiment of the present disclosure, and the chip can implement the corresponding processes implemented by the network device in the various methods of the embodiments of the present disclosure. For the sake of brevity, details thereof will be omitted here.

Optionally, the chip can be applied to the mobile terminal/terminal device in the embodiment of the present disclosure, and the chip can implement the corresponding processes implemented by the mobile terminal/terminal device in the various methods of the embodiments of the present disclosure. For the sake of brevity, details thereof will be omitted here.

It should be appreciated that the chip in the embodiment of the present disclosure may further be known as a system-level chip, a system-chip, a chip system, or a system-on-chip, etc.

FIG. 7 is a schematic block diagram showing a communication system 900 according to an embodiment of the present disclosure. As shown in FIG. 7, the communication system 900 includes a terminal device 910 and a network device 920.

Here, the terminal device 910 can be configured to implement the corresponding functions implemented by the terminal device in the above method, and the network device 920 can be configured to implement the corresponding functions implemented by the network device in the above method. For the sake of brevity, details thereof will be omitted here.

It is to be noted that the processor in the embodiment of the present disclosure may be an integrated circuit chip with signal processing capability. In an implementation, the steps of the above method embodiments can be implemented by hardware integrated logic circuits in a processor or instructions in the form of software. The processor can be a general purpose processor, a Digital Signal Processor (DSP), an Application Specific Integrated Circuit (ASIC), a Field Programmable Gate Array (FPGA) or another programmable logic device, a discrete gate or transistor logic device, or a discrete hardware component. The methods, steps, and logical block diagrams disclosed in the embodiments of the present disclosure can be implemented or performed. The general purpose processor may be a microprocessor or any conventional processor, etc. The steps of the methods disclosed in the embodiments of the present disclosure may be directly embodied as being performed and completed by a hardware decoding processor, or by a combination of hardware and software modules in the decoding processor. The software modules can be located in a known storage medium in the related art, such as random access memory, flash memory, read-only memory, programmable read-only memory, electrically erasable programmable memory, or register. The storage medium can be located in the memory, and the processor can read information from the memory and perform the steps of the above methods in combination with its hardware.

It can be appreciated that the memory in the embodiments of the present disclosure may be a volatile memory or a non-volatile memory, or may include both volatile and non-volatile memories. Here, the non-volatile memory may be a Read-Only Memory (ROM), a Programmable ROM (PROM), an Erasable PROM (EPROM), an Electrically EPROM (EEPROM), or a flash memory. The volatile memory may be a Random Access Memory (RAM), which is used as an external cache. As illustrative, rather than limiting, examples, many forms of RAMs are available, including Static RAM (SRAM), Dynamic RAM (DRAM), Synchronous DRAM (SDRAM), Double Data Rate SDRAM (DDR SDRAM), Enhanced SDRAM (ESDRAM), Synchlink DRAM (SLDRAM) ), and Direct Rambus RAM (DR RAM). It is to be noted that the memory used for the system and method described in the present disclosure is intended to include, but not limited to, these and any other suitable types of memories.

It can be appreciated that the above memories are exemplary only, rather than limiting the present disclosure. For example, the memory in the embodiment of the present disclosure may also be a Static RAM (SRAM), a Dynamic RAM (DRAM), a Synchronous DRAM (SDRAM), a Double Data Rate SDRAM (DDR SDRAM), an Enhanced SDRAM (ESDRAM), a Synch Link DRAM (SLDRAM), or a Direct Rambus RAM (DR RAM), etc. That is to say, the memory in the embodiments of the present disclosure is intended to include, but not limited to, these and any other suitable types of memories.

An embodiment of the present disclosure also provides a computer readable storage medium for storing a computer program.

Optionally, the computer readable storage medium can be applied to the network device in the embodiment of the present disclosure, and the computer program can cause a computer to perform corresponding procedures implemented by the network device in the various methods according to any of the embodiments of the present disclosure. Details thereof will be omitted here for simplicity.

Optionally, the computer readable storage medium can be applied to the mobile terminal/terminal device in the embodiment of the present disclosure, and the computer program can cause a computer to perform corresponding procedures implemented by the mobile terminal/terminal device in the various methods according to any of the embodiments of the present disclosure. Details thereof will be omitted here for simplicity.

An embodiment of the present disclosure also provides a computer program product including computer program instructions.

Optionally, the computer program product can be applied to the network device in the embodiment of the present disclosure, and the computer program instructions can cause a computer to perform corresponding procedures implemented by the network device in the various methods according to any of the embodiments of the present disclosure. Details thereof will be omitted here for simplicity.

Optionally, the computer program product can be applied to the mobile terminal/terminal device in the embodiment of the present disclosure, and the computer program instructions can cause a computer to perform corresponding procedures implemented by the mobile terminal/terminal device in the various methods according to any of the embodiments of the present disclosure. Details thereof will be omitted here for simplicity.

An embodiment of the present disclosure also provides a computer program.

Optionally, the computer program can be applied to the network device in the embodiment of the present disclosure. The computer program, when executed on a computer, can cause the computer to perform corresponding procedures implemented by the network device in the various methods according to any of the embodiments of the present disclosure. Details thereof will be omitted here for simplicity.

Optionally, the computer program can be applied to the mobile terminal/terminal device in the embodiment of the present disclosure. The computer program, when executed on a computer, can cause the computer to perform corresponding procedures implemented by the mobile terminal/terminal device in the various methods according to any of the embodiments of the present disclosure. Details thereof will be omitted here for simplicity.

It can be appreciated by those skilled in the art that units and algorithm steps in the examples described in connection with the embodiments disclosed herein can be implemented in electronic hardware or any combination of computer software and electronic hardware. Whether these functions are executed by hardware or software depends on specific applications and design constraint conditions of the technical solutions. Those skilled in the art may use different methods for each specific application to implement the described functions, and such implementation is to be encompassed by the scope of this disclosure.

Those skilled in the art can clearly understand that, for the convenience and conciseness of the description, for the specific operation processes of the systems, devices, and units described above, reference can be made to the corresponding processes in the foregoing method embodiments, and details thereof will be omitted here.

In the embodiments of the present disclosure, it can be appreciated that the disclosed systems, devices, and methods may be implemented in other ways. For example, the device embodiments described above are illustrative only. For example, the divisions of the units are only divisions based on logical functions, and there may be other divisions in actual implementations. For example, more than one unit or component may be combined or integrated into another system, or some features can be ignored or omitted. In addition, the mutual coupling or direct coupling or communicative connection as shown or discussed may be indirect coupling or communicative connection between devices or units via some interfaces which may be electrical, mechanical, or in any other forms.

The units described as separate components may or may not be physically separated, and the components shown as units may or may not be physical units, that is, they may be co-located or distributed across a number of network elements. Some or all of the units may be selected according to actual needs to achieve the objects of the solutions of the embodiments.

In addition, the functional units in the embodiments of the present disclosure may be integrated into one processing unit, or alternatively be separate physical modules, or two or more units may be integrated into one unit.

When the function is implemented in the form of a software functional unit and sold or used as a standalone product, it can be stored in a computer readable storage medium. Based on this understanding, all or part of the technical solutions according to the embodiments of the present disclosure, or the part thereof that contributes to the prior art, can be embodied in the form of a software product. The computer software product may be stored in a storage medium and contain instructions to enable a computer device, such as a personal computer, a server, or a network device, etc., to perform all or part of the steps of the method described in each of the embodiments of the present disclosure. The storage medium may include a Universal Serial Bus flash drive, a mobile hard disk, a Read-Only Memory (ROM), a Random Access Memory (RAM), a magnetic disk, an optical disc, or any other medium capable of storing program codes.

While the specific embodiments of the present disclosure have been described above, the scope of the present disclosure is not limited to these embodiments. Various variants and alternatives can be made by those skilled in the art without departing from the scope of the present disclosure. These variants and alternatives are to be encompassed by the scope of present disclosure as defined by the claims as attached.

## Claims

1. A wireless communication method (200), comprising:
transmitting (S210), by a terminal device, first information to a network device, the first information being used to report a maximum bandwidth capability supported by the terminal device,
**characterized in that**:
the first information includes maximum bandwidth capability information of the terminal device on each of at least one frequency band,
the maximum bandwidth capability information of the terminal device on each frequency band includes at least one piece of maximum bandwidth capability information each corresponding to one Sub-Carrier Spacing, SCS.

2. The method (200) according to claim 1, wherein the first information further includes at least one of:
at least one piece of maximum bandwidth capability information;
all bandwidths supportable by the terminal device; and
indication information indicating whether the terminal device supports all bandwidths.

3. The method (200) according to claim 2, wherein the at least one piece of maximum bandwidth capability information includes maximum bandwidth capability information corresponding to each of at least one SCS.

4. The method (200) according to claim 2 or 3, wherein the at least one piece of maximum bandwidth capability information includes maximum uplink bandwidth capability information and/or maximum downlink bandwidth capability information.

5. A wireless communication method (200), comprising:
receiving (S210), by a network device, first information transmitted by a terminal device, the first information being used to determine a maximum bandwidth capability supported by the terminal device,
**characterized in that**:
the first information includes maximum bandwidth capability information of the terminal device on each of at least one frequency band,
the maximum bandwidth capability information of the terminal device on each frequency band includes at least one piece of maximum bandwidth capability information each corresponding to one Sub-Carrier Spacing, SCS.

6. The method (200) according to claim 5, wherein the first information further includes at least one of:
at least one piece of maximum bandwidth capability information;
all bandwidths supportable by the terminal device; and
indication information indicating whether the terminal device supports all bandwidths.

7. The method (200) according to claim 6, wherein the at least one piece of maximum bandwidth capability information includes maximum bandwidth capability information corresponding to each of at least one SCS.

8. The method (200) according to claim 6 or 7, wherein the at least one piece of maximum bandwidth capability information includes maximum uplink bandwidth capability information and/or maximum downlink bandwidth capability information.

9. The method (200) according to any one of claims 5-8, wherein the first information further includes at least one of:
all bandwidths supportable by the terminal device on each of the at least one frequency band; and
indication information indicating whether the terminal device supports all bandwidths on each of the at least one frequency band.

10. The method (200) according to any one of claims 5 and 9, wherein the maximum bandwidth capability information of the terminal device on a second frequency band includes a set of maximum bandwidth capability information, and the set of maximum bandwidth capability information corresponds to all frequency band combinations including the second frequency band; or
the maximum bandwidth capability information of the terminal device on the second frequency band includes a plurality of sets of maximum bandwidth capability information, and each set of maximum bandwidth capability information corresponds to at least one frequency band combination including the second frequency band.

11. The method (200) according to any one of claims 5-10, wherein the first information includes maximum bandwidth capability information supported by the terminal device in at least one operation state.

12. The method (200) according to claim 11, wherein the operation state comprises a Multiple Input Multiple Output, MIMO, operation state.

13. A terminal device (910), comprising a processor (710) and a memory (720), wherein the memory (720) is configured to store a computer program, and the processor (710) is configured to invoke and execute the computer program stored in the memory (720) to perform the method (200) according to any of claims 1 to 4.

14. A network device (920), comprising a processor (710) and a memory (720), wherein the memory (720) is configured to store a computer program, and the processor (710) is configured to invoke and execute the computer program stored in the memory (720) to perform the method (200) according to any of claims 5 to 12.

## Patentansprüche

1. Drahtloskommunikationsverfahren (200), umfassend:
Übertragen (S210), durch eine Endgerätevorrichtung, von ersten Informationen an eine Netzwerkvorrichtung, wobei die ersten Informationen dazu verwendet werden, die durch die Endgerätevorrichtung unterstützte maximale Bandbreitenkapazität zu melden,
**dadurch gekennzeichnet, dass**:
die ersten Informationen Angaben zur maximalen Bandbreitenkapazität der Endgerätevorrichtung auf jedem von mindestens einem Frequenzband beinhalten,
die Angaben zur maximalen Bandbreitenkapazität der Endgerätevorrichtung auf jedem Frequenzband mindestens eine Angabe zur maximalen Bandbreitenkapazität, die jeweils einem Subträgerabstand (Sub-Carrier Spacing, SCS) entspricht, beinhalten.

2. Verfahren (200) nach Anspruch 1, wobei die ersten Informationen ferner mindestens eines von Folgendem beinhalten:
mindestens eine Angabe zur maximalen Bandbreitenkapazität;
alle durch die Endgerätevorrichtung unterstützten Bandbreiten; und
Indikatorinformationen, die angeben, ob die Endgerätevorrichtung alle Bandbreiten unterstützt.

3. Verfahren (200) nach Anspruch 2, wobei die mindestens eine Angabe zur maximalen Bandbreitenkapazität Angaben zur maximalen Bandbreitenkapazität beinhaltet, die jedem von mindestens einem SCS entsprechen.

4. Verfahren (200) nach Anspruch 2 oder 3, wobei die mindestens eine Angabe zur maximalen Bandbreitenkapazität Angaben zur maximalen Uplink-Bandbreitenkapazität und/oder Angaben zur maximalen Downlink-Bandbreite beinhaltet.

5. Drahtloskommunikationsverfahren (200), umfassend:
Empfangen (S210), durch eine Netzwerkvorrichtung, von ersten Informationen, die durch eine Endgerätevorrichtung übertragen werden, wobei die ersten Informationen dazu verwendet werden, die durch die Endgerätevorrichtung unterstützte maximale Bandbreitenkapazität zu ermitteln,
**dadurch gekennzeichnet, dass**:
die ersten Informationen Angaben zur maximalen Bandbreitenkapazität der Endgerätevorrichtung auf jedem von mindestens einem Frequenzband beinhalten,
die Angaben zur maximalen Bandbreitenkapazität der Endgerätevorrichtung auf jedem Frequenzband mindestens eine Angabe zur maximalen Bandbreitenkapazität, die jeweils einem Subträgerabstand (Sub-Carrier Spacing, SCS) entspricht, beinhalten.

6. Verfahren (200) nach Anspruch 5, wobei die ersten Informationen ferner mindestens eines von Folgendem beinhalten:
mindestens eine Angabe zur maximalen Bandbreitenkapazität;
alle durch die Endgerätevorrichtung unterstützten Bandbreiten; und
Indikatorinformationen, die angeben, ob die Endgerätevorrichtung alle Bandbreiten unterstützt.

7. Verfahren (200) nach Anspruch 6, wobei die mindestens eine Angabe zur maximalen Bandbreitenkapazität Angaben zur maximalen Bandbreitenkapazität beinhaltet, die jedem von mindestens einem SCS entsprechen.

8. Verfahren (200) nach Anspruch 6 oder 7, wobei die mindestens eine Angabe zur maximalen Bandbreitenkapazität Angaben zur maximalen Uplink-Bandbreitenkapazität und/oder Angaben zur maximalen Downlink-Bandbreite beinhaltet.

9. Verfahren (200) nach einem der Ansprüche 5 bis 8, wobei die ersten Informationen ferner mindestens eines von Folgendem beinhalten:
alle durch die Endgerätevorrichtung auf jedem des mindestens einen Frequenzband unterstützten Bandbreiten; und
Indikatorinformationen, die angeben, ob die Endgerätevorrichtung alle Bandbreiten auf jedem des mindestens einen Frequenzbands unterstützt.

10. Verfahren (200) nach einem der Ansprüche 5 und 9, wobei die Angaben zur maximalen Bandbreitenkapazität der Endgerätevorrichtung auf einem zweiten Frequenzband einen Satz von Angaben zur maximalen Bandbreitenkapazität beinhalten und dieser Satz von Angaben zur maximalen Bandbreitenkapazität allen Frequenzbandkombinationen entspricht, die das zweite Frequenzband einschließen; oder
die Angaben zur maximalen Bandbreitenkapazität der Endgerätevorrichtung auf dem zweiten Frequenzband eine Vielzahl von Sätzen von Angaben zur maximalen Bandbreitenkapazität beinhalten, wobei jeder Satz von Angaben zur maximalen Bandbreitenkapazität mindestens einer Frequenzbandkombination entspricht, die das zweite Frequenzband einschließt.

11. Verfahren (200) nach einem der Ansprüche 5 bis 10, wobei die ersten Informationen Angaben zur maximalen Bandbreitenkapazität beinhalten, die durch die Endgerätevorrichtung in mindestens einem Betriebszustand unterstützt wird.

12. Verfahren (200) nach Anspruch 11, wobei der Betriebszustand einen MIMO-Betriebszustand (Multiple Input Multiple Output) umfasst.

13. Endgerätevorrichtung (910), umfassend einen Prozessor (710) und einen Speicher (720), wobei der Speicher (720) konfiguriert ist, um ein Computerprogramm zu speichern, und der Prozessor (710) konfiguriert ist, das in dem Speicher (720) gespeicherte Computerprogramm aufzurufen und auszuführen, um das Verfahren (200) nach einem der Ansprüche 1 bis 4 durchzuführen.

14. Netzwerkvorrichtung (920), umfassend einen Prozessor (710) und einen Speicher (720), wobei der Speicher (720) konfiguriert ist, um ein Computerprogramm zu speichern, und der Prozessor (710) konfiguriert ist, das in dem Speicher (720) gespeicherte Computerprogramm aufzurufen und auszuführen, um das Verfahren (200) nach einem der Ansprüche 5 bis 12 durchzuführen.

## Revendications

1. Procédé de communication sans fil (200), comprenant :
la transmission (S210), par un dispositif terminal, de premières informations à un dispositif de réseau, les premières informations étant utilisées pour rendre compte d'une capacité de bande passante maximale prise en charge par le dispositif terminal,
**caractérisé en ce que** :
les premières informations incluent des informations de capacité de bande passante maximale du dispositif terminal sur chacune d'au moins une bande de fréquences,
les informations de capacité de bande passante maximale du dispositif terminal sur chaque bande de fréquences incluent au moins une information de capacité de bande passante maximale correspondant chacune à un espacement de sous-porteuses, SCS.

2. Procédé (200) selon la revendication 1, dans lequel les premières informations incluent en outre au moins l'un parmi :
au moins une information de capacité de bande passante maximale ;
toutes les bandes passantes pouvant être prises en charge par le dispositif terminal ; et
des informations d'indication précisant si le dispositif terminal prend en charge toutes les bandes passantes.

3. Procédé (200) selon la revendication 2, dans lequel la au moins une information de capacité de bande passante maximale inclut des informations de capacité de bande passante maximale correspondant à chacun d'au moins un SCS.

4. Procédé (200) selon la revendication 2 ou 3, dans lequel la au moins une information de capacité de bande passante maximale inclut des informations de capacité de bande passante de liaison montante maximale et/ou des informations de capacité de bande passante de liaison descendante maximale.

5. Procédé de communication sans fil (200), comprenant :
la réception (S210), par un dispositif de réseau, de premières informations transmises par un dispositif terminal, les premières informations étant utilisées pour déterminer une capacité de bande passante maximale prise en charge par le dispositif terminal,
**caractérisé en ce que** :
les premières informations incluent des informations de capacité de bande passante maximale du dispositif terminal sur chacune d'au moins une bande de fréquences,
les informations de capacité de bande passante maximale du dispositif terminal sur chaque bande de fréquences incluent au moins une information de capacité de bande passante maximale correspondant chacune à un espacement de sous-porteuses, SCS.

6. Procédé (200) selon la revendication 5, dans lequel les premières informations incluent en outre au moins l'un parmi :
au moins une information de capacité de bande passante maximale ;
toutes les bandes passantes pouvant être prises en charge par le dispositif terminal ; et
des informations d'indication précisant si le dispositif terminal prend en charge toutes les bandes passantes.

7. Procédé (200) selon la revendication 6, dans lequel la au moins une information de capacité de bande passante maximale inclut des informations de capacité de bande passante maximale correspondant à chacun d'au moins un SCS.

8. Procédé (200) selon la revendication 6 ou 7, dans lequel la au moins une information de capacité de bande passante maximale inclut des informations de capacité de bande passante de liaison montante maximale et/ou des informations de capacité de bande passante de liaison descendante maximale.

9. Procédé (200) selon l'une quelconque des revendications 5-8, dans lequel les premières informations incluent en outre au moins un élément parmi :
toutes les bandes passantes pouvant être prises en charge par le dispositif terminal sur chacune de la au moins une bande de fréquences ; et
des informations d'indication précisant si le dispositif terminal prend en charge toutes les bandes passantes sur chacune de la au moins une bande de fréquences.

10. Procédé (200) selon l'une quelconque des revendications 5 et 9, dans lequel les informations de capacité de bande passante maximale du dispositif terminal sur une seconde bande de fréquences incluent un ensemble d'informations de capacité de bande passante maximale, et l'ensemble d'informations de capacité de bande passante maximale correspond à toutes les combinaisons de bandes de fréquences incluant la seconde bande de fréquences ; ou
les informations de capacité de bande passante maximale du dispositif terminal sur la seconde bande de fréquences incluent une pluralité d'ensembles d'informations de capacité de bande passante maximale, et chaque ensemble d'informations de capacité de bande passante maximale correspond à au moins une combinaison de bandes de fréquences incluant le seconde bande de fréquences.

11. Procédé (200) selon l'une quelconque des revendications 5-10, dans lequel les premières informations incluent des informations de capacité de bande passante maximale prise en charge par le dispositif terminal dans au moins un état de fonctionnement.

12. Procédé (200) selon la revendication 11, dans lequel l'état de fonctionnement comprend un état de fonctionnement à entrées multiples et sorties multiples, MIMO.

13. Dispositif terminal (910), comprenant un processeur (710) et une mémoire (720), dans lequel la mémoire (720) est configurée pour stocker un programme informatique, et le processeur (710) est configuré pour appeler et exécuter le programme informatique stocké dans la mémoire (720) de façon à réaliser le procédé (200) selon l'une quelconque des revendications 1 à 4.

14. Dispositif de réseau (920), comprenant un processeur (710) et une mémoire (720), dans lequel la mémoire (720) est configurée pour stocker un programme informatique, et le processeur (710) est configuré pour appeler et exécuter le programme informatique stocké dans la mémoire (720) de façon à réaliser le procédé (200) selon l'une quelconque des revendications 5 à 12.
